# EUROPEAN PATENT SPECIFICATION

(11) **EP 3 964 709 B1**
(45) Date of publication and mention of the grant of the patent: **07.06.2023**
(21) Application number: 20914619.0
(22) Date of filing: 11.12.2020
(51) Int. Cl.: F03G 6/06, F24S 23/70

(54) **SOLAR GAS TURBINE POWER GENERATION SYSTEM EMPLOYING PHOTOTHERMAL PRINCIPLE**
SONNENGASTURBINENENERGIEERZEUGUNGSSYSTEM MIT FOTOTHERMISCHEM PRINZIP
SYSTÈME DE PRODUCTION D'ÉNERGIE À TURBINE À GAZ SOLAIRE UTILISANT UN PRINCIPE PHOTOTHERMIQUE

(30) Priority: 19.01.2020 CN 202010062944
(43) Date of publication of application: 09.03.2022
(73) Proprietor: Txegt Automotive Powertrain Technology Co., Ltd, Beijing 100176 (CN)
(72) Inventor: JIN, Pu, Beijing 100176 (CN)
(74) Representative: Petculescu, Ana-Maria
(86) International application number: PCT/CN2020/135901
(87) International publication number: WO 2021/143416

(56) References cited:
- CN-A- 105 626 406
- CN-A- 105 626 406
- CN-A- 111 156 139
- CN-U- 202 468 183
- CN-U- 209 083 420
- CN-U- 211 777 846
- JP-A- H07 332 888
- US-A- 4 414 812
- US-A1- 2016 281 638

## Description

### TECHNICAL FIELD

The present disclosure relates to the technical field of energy recovery and utilization, and in particular, to a solar gas turbine (SGT) power generation system based on a photothermal principle.

### BACKGROUND

Solar energy is a clean and pollution-free renewable energy source, and its exploitation and utilization are of great significance to relieve the present pressures on consumption and environmental pollution of fossil fuels.

Concentrating solar power (CSP) is a technology that converts thermal energy from solar radiation into electrical energy, and mainly includes dish, tower, trough and Fresnel CSP technologies. However, the CSP has low efficiency of direct thermal power generation, typically about 20%, and a vast amount of photothermal conversion energy is wasted. In addition, a single CSP system cannot provide enough energy in night or cloudy and rainy days. Therefore, it is promising that the CSP is combined with other power generation systems such as the gas turbine power generation system, which improves the overall power generation capacity of the system, makes the power generation system more stable and highly efficient.

The gas turbine power generation system possesses a series of advantages such as high efficiency, quick start-up, excellent peak load performance, short construction period, small floor area, little water consumption and little environmental pollution. However, due to the supply problems of fuels such as natural gas, the gas turbine power generation is restricted to some extent. Hence, the gas turbine power generation system needs to ensure the efficiency and power thereof, and meanwhile to reduce the fuel consumption as much as possible, which is widely applicable and desirable. Furthermore, the gas turbine power generation system with the CSP can uses radiation energy from the sun as a replacement for a part of thermal energy from the fuels, thereby reducing the fuel amount needed by the gas turbine power generation system.

In addition, the existing CSP system is commonly provided with reflectors fixed at some angles that are calculated optimally, so as to absorb the sunlight. However, the reflectors are fixed while the sun relatively moves, so the sun does not always radiate the reflectors directly. When the sun radiates the reflectors obliquely, little sunlight is reflected. At this time, the solar energy cannot be fully utilized to cause a waste of energy. CN202468183U discloses a system capable of converting solar energy into electric energy and particularly a solar hybrid regeneration eddy-current gas-turbine power generation system. Air enters the air compressor through the filter, and the air is compressed into high-pressure gas through the air compressor, generally reaching 3-12 atmospheres, and then the compressed air flows through the regenerator and enters the solar thermal energy collector, the solar thermal energy collector receives the solar energy from the solar focusing device, and heats the compressed air. If the solar energy is insufficient at this time, the air can be further heated by the burner according to the demand to make up for the deficiency in the input of solar energy. After the compressed air is heated to about 900°C to 1100°C in the solar thermal energy collector, in such a high temperature state, it enters the turbine. The turbine is connected to the generator by the rotating shaft, and the generator is driven. Power is generated, and the air compressor is no-load at this time. The waste heat gas generated by the turbine is returned to the regenerator, and the waste heat is exchanged to the regenerator, and then discharged, thereby transferring the heat to the gas entering the air compressor, improving the efficiency of the system.

### SUMMARY

An objective of the present disclosure is to provide an SGT power generation system based on a photothermal principle, to solve the above technical problems. The present disclosure can implement a combined cycle of CSP and gas turbine power generation, has a higher energy utilization rate than that of single CSP or gas turbine power generation, and utilizes the energy efficiently.

The present disclosure uses the following technical solutions:
An SGT power generation system based on a photothermal principle includes: a gas turbine, a solar collector and a solar reflector, the gas turbine being fixed above the solar reflector through a fixing rod, where
the gas turbine includes a compressor, a turbine, a recuperator and a combustion chamber, the recuperator includes an outer shell, an intermediate shell and an inner shell, a low-temperature gas inlet passage is formed between the intermediate shell and the outer shell, a high-temperature gas inlet passage is formed between the intermediate shell and the inner shell, an inlet and an outlet of the low-temperature gas inlet passage communicate with an outlet of the compressor and an inlet of the combustion chamber, respectively, and an inlet and an outlet of the high-temperature gas inlet passage communicate with an outlet of the turbine and the outside, respectively; and
the solar collector includes an absorber plate, the absorber plate covers the outer shell of the recuperator, and the absorber plate is located on a reflecting focus or a focal line of the solar reflector. The SGT power generation system comprises a mounting stand. The solar reflector is provided on the mounting stand through an adjustment device, and the adjustment device comprises telescopic rods, hinges, bases, expansion bottles and tubes. An even number of bases are fixed on a top of the mounting stand. The bases are provided and arranged pairwise and symmetrically. The bases are connected to the telescopic rods through the hinges, and the telescopic rods are connected to a bottom of the solar reflector. The expansion bottles are fixed outside each of the bases and on the top of the mounting stand. The expansion bottles are connected to the telescopic rods of the bases on an opposite side through the tubes. When the expansion bottles are heated, the telescopic rods on the opposite side are stretched out to raise the solar reflector on the opposite side.

Further, the outer shell, the intermediate shell and the inner shell may be parallel to each other from outside to inside; and
multiple fins may be arranged inside the outer shell, the fins each may be arranged along a length direction of the recuperator, and certain ends of the fins may be fixed in the outer shell.

Further, the outer shell, the intermediate shell and the inner shell may be coaxial and form a cylindrical shape from outside to inside; and
the fins each may be radially arranged in the outer shell along a length direction of the gas turbine, and the fins each may be arranged along a radial direction of the outer shell.

Further, the outer shell, the intermediate shell and the inner shell each may be coaxial and form a square tube shape from outside to inside; and
the fins each may be arranged on a plate of the outer shell along a length direction of the gas turbine, and the fins each may be perpendicular to the outer shell.

Further, the solar reflector may have a large area near a head of the gas turbine, and a small area near a tail of the gas turbine.

Further, the telescopic rods each may include an ejector rod and a sleeve rod, a bottom of the sleeve rod may be provided on each of the bases through the hinge, a bottom of the ejector rod may be arranged in the sleeve rod and may be in sliding fit with the sleeve rod, and a top of the ejector rod may be connected to the bottom of the solar reflector; and
the expansion bottle may be filled with an expansion liquid, and when the expansion bottle is heated, the expansion liquid may expand to eject a connected ejector rod.

Further, the bases may be uniformly arranged along a circumference, and the telescopic rods may be uniformly arranged along a corresponding circumference.

Further, the bases and the telescopic rods each may be arranged into two symmetrical rows along the mounting stand.

Further, the expansion bottle may be embedded into a bottle holder, and the bottle holder may be fixed on the mounting stand.

Compared with the prior art, the present disclosure has the following beneficial effects:
1. With principles of the integration of CSP and gas turbine power generation, and by covering the sunlight-receiving absorber plate on the outer shell of the recuperator of the gas turbine to heat a working medium, the present disclosure can improve the energy utilization efficiency; and through the reasonable arrangement of the recuperator and the cooperation between the compressor, the turbine, the recuperator and the combustion chamber, the present disclosure can recycle the heat generated by each link in the system and has the high energy recovery efficiency.
2. The recuperator provided by the present disclosure can improve the heat exchange efficiency of the working medium through the low-temperature gas inlet passage and the high-temperature gas inlet passage; and as only certain ends of the fins are fixed on the outer shell, and the other ends of the fins are unnecessarily sealed, the present disclosure greatly reduces the manufacturing difficulty of the recuperator.
3. With the scheme in which the solar reflector has the large area near the head of the gas turbine and the small area near the tail of the gas turbine, the present disclosure can solve the temperature drop from the front end to the rear end due to the long absorber plate.
4. Without the consumption of the electrical energy for tracking the solar energy and with the accurate tracking, the present disclosure can yield the higher energy utilization rate.

### BRIEF DESCRIPTION OF THE DRAWINGS

FIG. 1 is a schematic view of a working principle of an SGT power generation system according to the present disclosure.
FIG. 2 is a schematic side view of a recuperator according to an embodiment of the present disclosure.
FIG. 3 is a schematic front view of a recuperator according to an embodiment of the present disclosure.
FIG. 4 is a schematic side view of a recuperator according to another embodiment of the present disclosure.
FIG. 5 is a schematic front view of a recuperator according to another embodiment of the present disclosure.
FIG. 6 is a schematic structural view for tracking sunlight according to an embodiment of the present disclosure.
FIG. 7 is a schematic top view for tracking sunlight according to an embodiment of the present disclosure.
FIG. 8 is a schematic structural view for tracking sunlight according to another embodiment of the present disclosure.
FIG. 9 is a schematic top view for tracking sunlight according to another embodiment of the present disclosure.

### DETAILED DESCRIPTION OF THE EMBODIMENTS

In order to better understand the technical solutions of the present disclosure, the present disclosure is further described below with reference to specific embodiments and accompanying drawings.

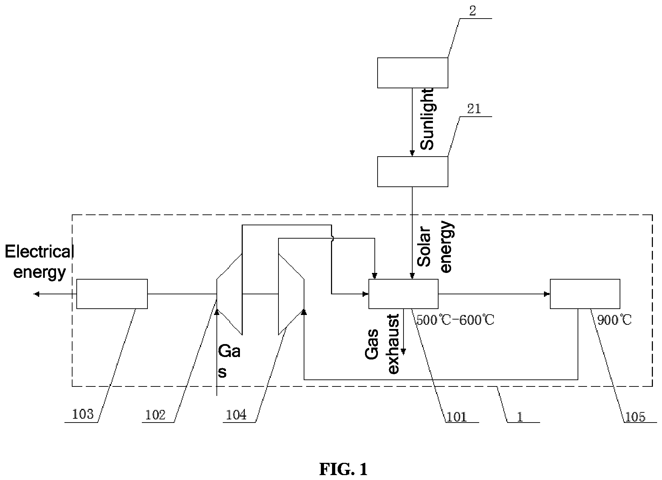

As shown in FIG. 1, an SGT power generation system based on a photothermal principle provided by the embodiment of the present disclosure includes a gas turbine 1, a solar reflector 2 and a solar collector 21.

The gas turbine 1 in the present disclosure includes a compressor 102, a turbine 104, a recuperator 101 and a combustion chamber 105.

The gas turbine 1 is fixed above the solar reflector 2 through a fixing rod 5, and the solar collector 21 is located on a reflecting focus (for the dish reflector) or a focal line (for the trough reflector) for the sunlight. Specifically, the solar collector 21 includes an absorber plate 211 on the gas turbine 1. The absorber plate 211 covers the outer shell of the recuperator 101, and may also serve as the partial or complete outer shell of the recuperator 101.

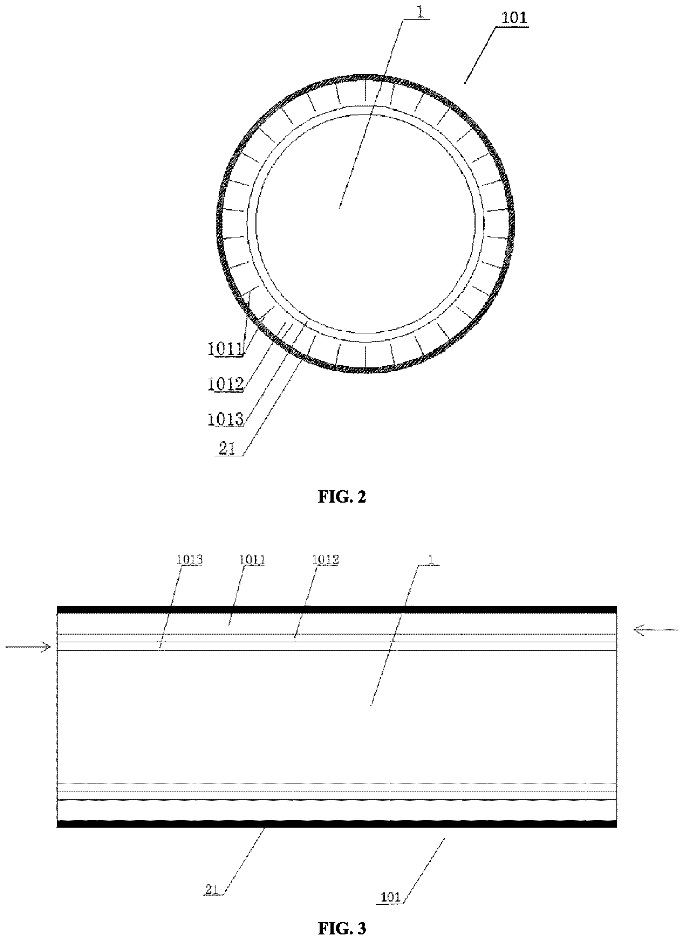

As an implementation of the present disclosure, referring to FIG. 2 and FIG. 3, the recuperator 101 of the gas turbine includes an outer shell, an intermediate shell and an inner shell that are coaxial and form a cylindrical shape from outside to inside, the absorber plate 211 covers the outer shell, multiple fins 1011 are arranged inside the outer shell along a length direction of the gas turbine 1, the fins 1011 each are arranged radially, and the fins 1011 each include one end fixed in the outer shell, and the other end suspended and keeping a clearance from the intermediate shell. A low-temperature gas inlet passage 1012 is formed between the intermediate shell and the outer shell. The fins 1011 are used to increase the heat dissipating area, such that heat of the absorber plate 211 can be fully transferred through the outer shell and the fins 1011 to preheat the gas in the low-temperature gas inlet passage 1012. A high-temperature gas inlet passage 1013 is formed between the intermediate shell and the inner shell. An inlet and an outlet of the low-temperature gas inlet passage 1012 communicate with an outlet of the compressor 102 and an inlet of the combustion chamber 105, respectively, and an inlet and an outlet of the high-temperature gas inlet passage 1013 communicate with an outlet of the turbine 104 and an outside atmosphere or other afterheat recycling devices, respectively.

The high-temperature gas in the combustion chamber 105 pushes the turbine 104 to work and then flows into the high-temperature gas inlet passage 1013. The compressed gas is exhausted from the compressor 102 to enter the low-temperature gas inlet passage 1012. Upon heat exchange between the high-temperature gas and the low-temperature gas, the low-temperature gas enters the combustion chamber 105 from the low-temperature gas inlet passage 1012 for combustion, thereby improving the temperature of the gas entering the combustion chamber 105 to yield a higher utilization rate of the fuel. The high-temperature gas is exhausted through the high-temperature gas inlet passage 1013, and the gas may be exhausted to the atmosphere or further be used for the afterheat recycling.

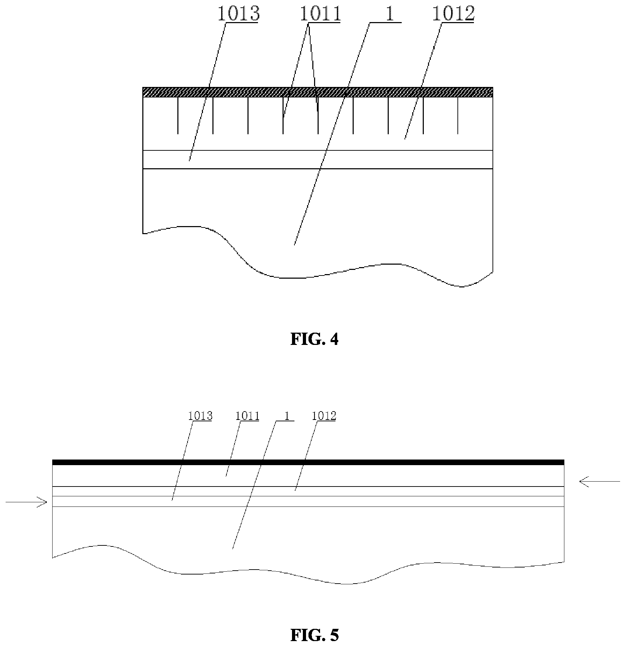

As another implementation of the present disclosure, referring to FIG. 4 and FIG. 5, the recuperator 101 of the gas turbine includes an outer shell, an intermediate shell and an inner shell that are parallel to each other and form a square tube shape from outside to inside, the absorber plate 211 covers the outer shell, the fins 1011 are parallel to each other and are arranged along a length direction of the recuperator 101, and certain ends of the fins 1011 are fixed in the outer shell. A low-temperature gas inlet passage 1012 is formed between the intermediate shell and the outer shell. The fins 1011 are used to increase the heat dissipating area, such that heat of the absorber plate 211 can be fully transferred through the outer shell and the fins 1011 to preheat the gas in the low-temperature gas inlet passage 1012. A high-temperature gas inlet passage 1013 is formed between the intermediate shell and the inner shell. An inlet and an outlet of the low-temperature gas inlet passage 1012 communicate with an outlet of the compressor 102 and an inlet of the combustion chamber 105, respectively, and an inlet and an outlet of the high-temperature gas inlet passage 1013 communicate with an outlet of the turbine 104 and an outside atmosphere or other afterheat recycling devices, respectively.

The high-temperature gas in the combustion chamber 105 pushes the turbine 104 to work and then flows into the high-temperature gas inlet passage 1013. The compressed gas is exhausted from the compressor 102 to enter the low-temperature gas inlet passage 1012. Upon heat exchange between the high-temperature gas and the low-temperature gas, the low-temperature gas enters the combustion chamber 105 from the low-temperature gas inlet passage 1012 for combustion, and the high-temperature gas is exhausted through the high-temperature gas inlet passage 1013, and the gas may be exhausted to the atmosphere or further be used for the afterheat recycling.

The SGT power generation system based on a photothermal principle in the above embodiment of the present disclosure has the following specific working process:
The gas charged to the compressor 102 is compressed to enter the inlet of the low-temperature gas inlet passage 1012 in the recuperator 101, the gas in the recuperator 101 having a temperature of 500-600°C. The gas flowing out from the outlet of the low-temperature gas inlet passage 1012 in the recuperator 101 is charged to the combustion chamber 105 for combustion. The combusted high-temperature gas is charged to the turbine 104 such that the turbine drives the motor 103 for power generation. The gas from the outlet of the turbine 104 is charged to the inlet of the high-temperature gas inlet passage 1013 in the recuperator 101, cooled in the recuperator 101, and exhausted to the outside from the outlet of the high-temperature gas inlet passage 1013 in the recuperator 101. The combustion chamber 105 has a temperature of 800-950°C, preferably 900°C. The motor 103 is an integrated starter generator (ISG), which functions as the starter to drive the compressor 102 for rotation and then functions as the generator for power generation after accelerated to implement individual operation.

Further, as the absorber plate 211 is long, and particularly when the trough reflector is used, the absorber plate and the trough reflector may be 20 m long, there is a temperature drop from the front end to the rear end and thus more heat is required subsequently. In view of this, the embodiment of the present disclosure provides a structure of the solar reflector 2: An area of a rear segment of the reflector is increased, namely the solar reflector 2 has a large area near a head of the gas turbine 1, and a small area near a tail of the gas turbine 1.

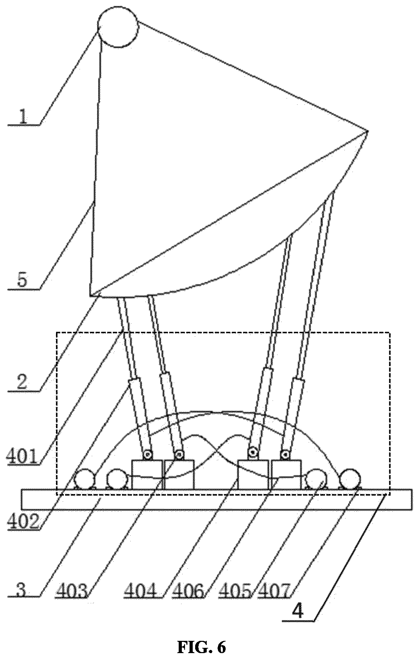

Referring to FIGS. 6-9, the solar reflector 2 in the present disclosure is a reflector having a fixed focus, specifically, the dish reflector or the trough reflector may be used. When the dish reflector is used, the absorber plate 211 is located on a reflecting focus of the reflector; and when the trough reflector is used, the absorber plate 211 is located on a focal line of the reflector.

Preferably, referring to FIGS. 6-9, the present disclosure further includes a mounting stand 3 and an adjustment device 4.

The mounting stand 3 is a flat plate fixed on the ground or embedded into the ground, and may be a steel plate.

Concerning the dish reflector, referring to FIG. 6, the adjustment device 4 includes ejector rods 401, sleeve rods 402, hinges 403, bases 404, expansion bottles 405, and tubes 406.

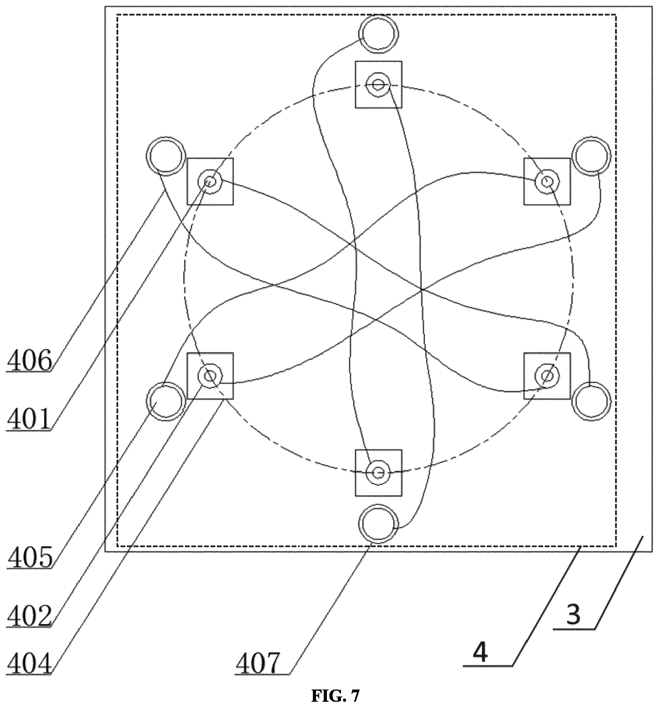

Multiple bases 404 are fixed on a top of the mounting stand 3. There are an even number of the bases 404 that are arranged pairwise and symmetrically along a circumference (preferably, referring to FIG. 7, the bases 404 are uniformly arranged along the circumference). The bases 404 are connected to a bottom of the solar reflector 2 through telescopic rods. The telescopic rods include the ejector rods 401 and the sleeve rods 402, the ejector rods 401 can slide in the sleeve rods 402, bottoms of the sleeve rods 402 are provided on the bases 404 through the hinges 403, and the ejector rods 401 include bottoms arranged in the sleeve rods 402 and tops connected to the bottom of the solar reflector 2 (preferably, referring to FIG. 7, the ejector rods 401 are uniformly arranged on the bottom of the solar reflector 2 along a circumference). The expansion bottles 405 are fixed outside the bases 404 and on the top of the mounting stand 3. The expansion bottles 405 each are filled with an expansion liquid (expansion kerosene may be selected) and connected to sleeve rods 402 of bases 404 on an opposite side through the tubes 406; and when the expansion bottles 405 are heated, the expansion oil is expanded to eject ejector rods 401 on the opposite side, thereby raising the solar reflector 2 on the opposite side to absorb strong light.

Further, when the sunlight perpendicularly radiates the ground, the degrees to which the expansion bottles 405 are heated are the same, and the axial center of the solar reflector 2 is perpendicular to the ground. The expansion bottles 405 each may be embedded into a bottle holder 407, and the bottle holder 407 is fixed on the mounting stand 3.

Referring to FIG. 6, in the adjustment device 4 of the embodiment, supposing that the strong light is located on the left side, the telescopic rods on the right side are longer than those on the left side, such that the right side of the solar reflector 2 is higher than the left side to receive the strong light on the left side; and on the contrary, the solar reflector can receive the strong light on the right side. Therefore, the power generation system provided by the present disclosure can automatically track the sunlight under the action of the adjustment device 4, to ensure that the solar reflector 2 always receives the strong light.

Referring to FIG. 7, in the adjustment device 4 of the embodiment, there are three pairs of telescopic rods, and the solar reflector 2 can be adjusted from three perspectives. There may also be an integer pair of telescopic rods such as one pair, two pairs, four pairs and five pairs. More telescopic rods are helpful to adjust the angle of the solar reflector 2 more accurately.

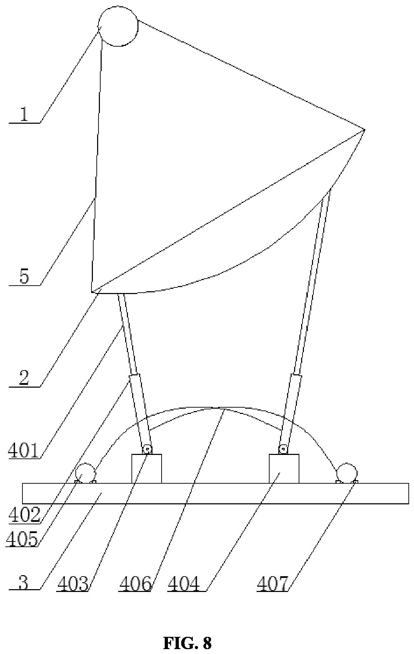

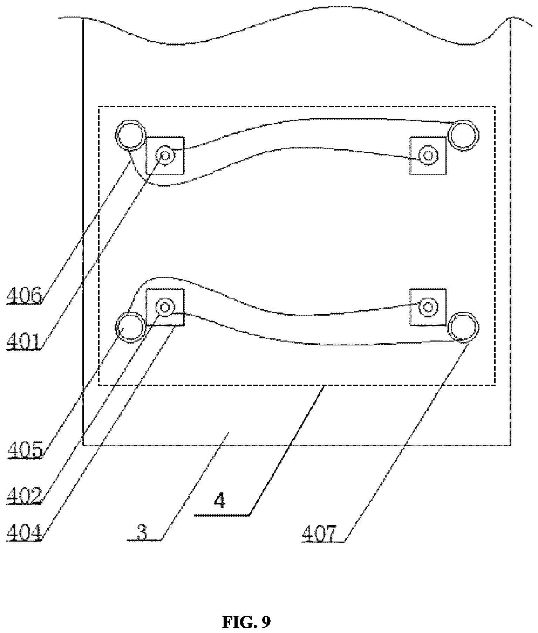

For the trough reflector, referring to FIG. 8 and FIG. 9, multiple bases 404 are fixed on the top of the mounting stand 3, the bases 404 are arranged into two symmetrical rows, and the rest descriptions are the same as those of the dish reflector.

## Claims

1. A solar gas turbine (SGT) power generation system based on a photothermal principle, comprising: a gas turbine (1), a solar collector (21) and a solar reflector (2);
the gas turbine (1) is fixed above the solar reflector (2) through a fixing rod (5),
the gas turbine (1) comprises a compressor (102), a turbine (104), a recuperator (101) and a combustion chamber (105); the solar collector (21) comprises an absorber plate (211); and the absorber plate (211) is located on a reflecting focus or a focal line of the solar reflector (2), **characterized in that**
the recuperator (101) comprises an outer shell, an intermediate shell and an inner shell, wherein a low-temperature gas inlet passage (1012) is formed between the intermediate shell and the outer shell, a high-temperature gas inlet passage (1013) is formed between the intermediate shell and the inner shell, an inlet and an outlet of the low-temperature gas inlet passage (1012) communicate with an outlet of the compressor (102) and an inlet of the combustion chamber (105), respectively, and an inlet and an outlet of the high-temperature gas inlet passage (1013) communicate with an outlet of the turbine (104) and an outside, respectively; and
the absorber plate (211) covers the outer shell of the recuperator (101);
wherein the SGT power generation system comprises a mounting stand (3); the solar reflector (2) is provided on the mounting stand (3) through an adjustment device (4), and the adjustment device (4) comprises telescopic rods, hinges (403), bases (404), expansion bottles (405) and tubes (406);
an even number of bases (404) are fixed on a top of the mounting stand (3), the bases (404) are provided and arranged pairwise and symmetrically, the bases (404) are connected to the telescopic rods through the hinges (403), and the telescopic rods are connected to a bottom of the solar reflector (2); and
the expansion bottles (405) are fixed outside each of the bases (404) and on the top of the mounting stand (3), the expansion bottles (405) are connected to the telescopic rods of the bases (404) on an opposite side through the tubes (406), and when the expansion bottles (405) are heated, the telescopic rods on the opposite side are stretched out to raise the solar reflector (2) on the opposite side.

2. The SGT power generation system according to claim 1, **characterized in that** the outer shell, the intermediate shell and the inner shell are arranged in parallel to each other from outside to inside; and
a plurality of fins (1011) are arranged inside the outer shell, the plurality of fins (1011) each are arranged along a length direction of the recuperator (101), and an end of each of the plurality of fins (1011) is fixed in the outer shell.

3. The SGT power generation system according to claim 1, **characterized in that** the outer shell, the intermediate shell and the inner shell are coaxial and form a cylindrical shape from outside to inside; and
a plurality of fins (1011) each are radially arranged in the outer shell along a length direction of the gas turbine (1), and the plurality of fins (1011) each are arranged along a radial direction of the outer shell.

4. The SGT power generation system according to claim 2, **characterized in that** the outer shell, the intermediate shell and the inner shell each are coaxial and form a square tube shape from outside to inside; and
the plurality of fins (1011) each are arranged on a plate of the outer shell along a length direction of the gas turbine (1), and the plurality of fins (1011) each are perpendicular to the outer shell.

5. The SGT power generation system according to claim 1, **characterized in that** the solar reflector (2) has a large area near a head of the gas turbine (1), and a small area near a tail of the gas turbine (1).

6. The SGT power generation system according to claim 1, **characterized in that** the telescopic rods each comprise an ejector rod (401) and a sleeve rod (402), a bottom of the sleeve rod (402) is provided on each of the bases (404) through the hinges (403), a bottom of the ejector rod (401) is arranged in the sleeve rod (402) and is in sliding fit with the sleeve rod (402), and a top of the ejector rod (401) is connected to the bottom of the solar reflector (2); and
the expansion bottles (405) are filled with an expansion liquid, and when the expansion bottles (405) are heated, the expansion liquid expands to eject the ejector rod (401) connected to the expansion bottles (405).

7. The SGT power generation system according to claim 1, **characterized in that** the bases (404) are uniformly arranged along a circumference, and the telescopic rods are uniformly arranged along a corresponding circumference.

8. The SGT power generation system according to claim 1, **characterized in that** the bases (404) and the telescopic rods each are arranged into two symmetrical rows along the mounting stand (3).

9. The SGT power generation system according to claim 1, **characterized in that** the expansion bottles (405) are embedded into a bottle holder (407), and the bottle holder (407) is fixed on the mounting stand (3).

## Patentansprüche

1. Solargasturbinen(SGT)-Stromerzeugungssystem nach dem Fotothermalprinzip, umfassend: eine Gasturbine (1), einen Solarkollektor (21) und einen Solarreflektor (2);
wobei die Gasturbine (1) durch eine Fixierungsstange (5) über dem Solarreflektor (2) fixiert ist,
wobei die Gasturbine (1) einen Kompressor (102), eine Turbine (104), einen Rekuperator (101) und eine Brennkammer (105) umfasst; der Solarkollektor (21) eine Absorptionsplatte (211) umfasst; und die Absorptionsplatte (211) an einem reflektierenden Brennpunkt oder einer Brennlinie des Solarreflektors (2) angeordnet ist, **dadurch gekennzeichnet, dass**
der Rekuperator (101) eine Außenhülle, eine Zwischenhülle und eine Innenhülle umfasst, wobei ein Niedrigtemperaturgaseinlassdurchgang (1012) zwischen der Zwischenhülle und der Außenhülle gebildet ist, ein Hochtemperaturgaseinlassdurchgang (1013) zwischen der Zwischenhülle und der Innenhülle gebildet ist, ein Einlass und ein Auslass des Niedrigtemperaturgaseinlassdurchgangs (1012) jeweils mit einem Auslass des Kompressors (102) und einem Einlass der Brennkammer (105) in Verbindung stehen und ein Einlass und ein Auslass des Hochtemperaturgaseinlassdurchgangs (1013) jeweils mit einem Auslass der Turbine (104) und dem Äußeren in Verbindung stehen; und
die Absorptionsplatte (211) die Außenhülle des Rekuperators (101) abdeckt;
wobei das SGT-Stromerzeugungssystem einen Montageständer (3) umfasst; der Solarreflektor (2) durch eine Einstellvorrichtung (4) an dem Montageständer (3) bereitgestellt ist und die Einstellvorrichtung (4) teleskopischen Stangen, Scharniere (403), Sockel (404), Expansionsflaschen (405) und Rohre (406) umfasst;
eine gerade Anzahl der Sockel (404) an einer Oberseite des Montageständers (3) fixiert ist, die Sockel (404) paarweise und symmetrisch bereitgestellt und angeordnet sind, die Sockel (404) durch die Scharniere (403) mit den teleskopischen Stangen verbunden sind und die teleskopischen Stangen mit einer Unterseite des Solarreflektors (2) verbunden sind; und
die Expansionsflaschen (405) an der Außenseite der einzelnen Sockel (404) und an der Oberseite des Montageständers (3) fixiert sind, die Expansionsflaschen (405) durch Rohre (406) auf einer gegenüberliegende Seite mit den teleskopischen Stangen der Sockel (404) verbunden sind und die teleskopischen Stangen auf der gegenüberliegenden Seite bei Erwärmung der Expansionsflaschen (405) ausfahren, um den Solarreflektor (2) auf die gegenüberliegende Seite anzuheben.

2. SGT-Stromerzeugungssystem nach Anspruch 1, **dadurch gekennzeichnet, dass** die Außenhülle, die Zwischenhülle und die Innenhülle von außen nach innen parallel zueinander angeordnet sind; und
eine Vielzahl von Lamellen (1011) im Inneren der Außenhülle angeordnet ist, wobei jede der Vielzahl von Lamellen (1011) in einer Längenrichtung des Rekuperators (101) angeordnet ist und ein Ende jeder der Vielzahl von Lamellen (1011) in der Außenhülle fixiert ist.

3. SGT-Stromerzeugungssystem nach Anspruch 1, **dadurch gekennzeichnet, dass** die Außenhülle, die Zwischenhülle und die Innenhülle jeweils koaxial sind und von außen nach innen eine zylindrische Form bilden; und
eine Vielzahl von Lamellen (1011), die jeweils radial entlang einer Längenrichtung der Gasturbine (1) angeordnet in der Außenhülle angeordnet sind, wobei jede der Vielzahl von Lamellen (1011) entlang einer Radialrichtung der Außenhülle angeordnet ist.

4. SGT-Stromerzeugungssystem nach Anspruch 2, **dadurch gekennzeichnet, dass** die Außenhülle, die Zwischenhülle und die Innenhülle jeweils koaxial sind und von außen nach innen eine quadratische Rohrform bilden; und
jede der Vielzahl von Lamellen (1011) auf einer Platte der Außenhülle in einer Längenrichtung der Gasturbine (1) angeordnet ist und jede Vielzahl von Lamellen (1011) senkrecht zur Außenhülle ist.

5. SGT-Stromerzeugungssystem nach Anspruch 1, **dadurch gekennzeichnet, dass** der Solarreflektor (2) eine große Fläche nahe einem Kopf der Gasturbine (1) und eine kleine Fläche nahe einem Ende der Gasturbine (1) aufweist.

6. SGT-Stromerzeugungssystem nach Anspruch 1, **dadurch gekennzeichnet, dass** die teleskopischen Stangen jeweils eine Ausfahrstange (401) und eine Hülsenstange (402) umfassen, eine Unterseite der Hülsenstange (402) durch die Scharniere (403) an jedem der Sockel (404) bereitgestellt ist, eine Unterseite der Ausfahrstange (401) in der Hülsenstange (402) angeordnet ist und in Gleitpassung mit der Hülsenstange (402) ist und eine Oberseite der Ausfahrstange (401) mit der Unterseite des Solarreflektors (2) verbunden ist; und
die Expansionsflaschen (405) mit einer Expansionsflüssigkeit gefüllt sind, und die Expansionsflüssigkeit sich bei Erwärmung der Expansionsflaschen (405), um die die mit den Expansionsflaschen (405) verbundene Ausfahrstange (401) auszufahren.

7. SGT-Stromerzeugungssystem nach Anspruch 1, **dadurch gekennzeichnet, dass** die Sockel (404) gleichmäßig an einem Umfang angeordnet sind und die teleskopischen Stangen gleichmäßig an einem entsprechenden Umfang angeordnet sind.

8. SGT-Stromerzeugungssystem nach Anspruch 1, **dadurch gekennzeichnet, dass** die Sockel (404) und die teleskopischen Stangen jeweils in zwei symmetrischen Reihen am Montageständer (3) angeordnet sind.

9. SGT-Stromerzeugungssystem nach Anspruch 1, **dadurch gekennzeichnet, dass** die Expansionsflaschen (405) in einen Flaschenhalter (407) eingebettet sind und der Flaschenhalter (407) am Montageständer (3) fixiert ist.

## Revendications

1. Un système de production d'électricité à turbine à gaz solaire (SGT) basé sur un principe photo-thermique, comprenant : une turbine à gaz (1), un capteur solaire (21) et un réflecteur solaire (2) ;
la turbine à gaz (1) est fixée au-dessus du réflecteur solaire (2) via une tige de fixation (5),
la turbine à gaz (1) comprend un compresseur (102), une turbine (104), un récupérateur (101) et une chambre de combustion (105) ; le capteur solaire (21) comprend une plaque d'absorbeur (211); et la plaque d'absorbeur (211) est située sur une focalisation réfléchissante ou une ligne focale du réflecteur solaire (2), **caractérisé en ce que**
le récupérateur (101) comprend une enveloppe externe, une enveloppe intermédiaire et une enveloppe interne, dans lequel un passage d'admission de gaz basse température (1012) est formé entre l'enveloppe intermédiaire et l'enveloppe externe, un passage d'admission de gaz haute température (1013) est formé est formé entre l'enveloppe intermédiaire et l'enveloppe interne, une admission et une sortie du passage d'admission de gaz basse température (1012) communique avec une sortie du compresseur (102) et une admission de la chambre de combustion (105), respectivement, et une admission et une sortie du passage d'admission de gaz haute température (1013) communique avec une sortie de la turbine (104) et l'extérieur, respectivement ; et
la plaque d'absorbeur (211) couvre l'enveloppe externe du récupérateur (101) ;
dans lequel le système de production d'électricité SGT comprend un support de montage (3) ; le réflecteur solaire (2) est agencé sur le support de montage (3) via un dispositif d'ajustement (4), et le dispositif d'ajustement (4) comprend des tiges télescopiques, des articulations (403), des bases (404), des vases d'expansion (405) et des tubes (406) ;
un nombre pair de bases (404) est fixé sur le sommet du support de montage (3), les bases (404) sont fournies et agencées par paire et de façon symétrique, les bases (404) sont raccordées aux tiges télescopiques via les articulations (403), et les tiges télescopiques sont raccordées à la base du réflecteur solaire (2) ; et
les vases d'expansion (405) sont fixées à l'extérieur de chaque base (404) et au sommet du support de montage (3), les vases d'expansion (405) sont raccordées aux tiges télescopiques des bases (404) sur le côté opposé via les tubes (406), et lorsque les vases d'expansion (405) sont chauffées, les tiges télescopiques sur le côté opposé sont étirées afin d'élever le réflecteur solaire (2) sur le côté opposé.

2. Un système de production d'électricité SGT selon la revendication 1, **caractérisé en ce que** l'enveloppe externe, l'enveloppe intermédiaire et l'enveloppe interne sont agencées de façon mutuellement parallèle de l'extérieur vers l'intérieure ; et
une pluralité d'ailettes (1011) est agencée à l'intérieur de l'enveloppe externe, chacune de la pluralité d'ailettes (1011) est agencée dans le sens de la longueur du récupérateur (101), et une extrémité de chacune de la pluralité d'ailettes (1011) est fixée sur l'enveloppe externe.

3. Un système de production d'électricité SGT selon la revendication 1, **caractérisé en ce que** l'enveloppe externe, l'enveloppe intermédiaire et l'enveloppe interne sont coaxiales et composent une forme cylindrique de l'extérieur vers l'intérieur ; et
chacune de la pluralité d'ailettes (1011) est agencée radialement dans l'enveloppe externe dans le sens de la longueur de la turbine à gaz (1), chacune de la pluralité d'ailettes (1011) est agencée dans le sens radial de l'enveloppe externe.

4. Un système de production d'électricité SGT selon la revendication 2, **caractérisé en ce que** the l'enveloppe externe, l'enveloppe intermédiaire et l'enveloppe interne sont coaxiales et composent une forme de tube carré de l'extérieur vers l'intérieur ; et
chacune de la pluralité d'ailettes (1011) est agencée sur une plaque de l'enveloppe externe dans le sens de la longueur de la turbine à gaz (1), chacune de la pluralité d'ailettes (1011) est perpendiculaire à l'enveloppe externe.

5. Un système de production d'électricité SGT selon la revendication 1, **caractérisé en ce que** le réflecteur solaire (2) est doté d'une grande zone proximale de la tête de la turbine à gaz (1), et d'une petite zone proximale de la queue de la turbine à gaz (1).

6. Un système de production d'électricité SGT selon la revendication 1, **caractérisé en ce que** les tiges télescopiques comprennent chacune une tige d'éjection (401) et une tige de manchon (402), le bas de la tige de manchon (402) est agencé sur chacune des bases (404) via les articulations (403), la base de la tige d'éjection (401) est agencée dans la tige de manchon (402) et est ajustée pour coulisser avec la tige de manchon (402), et le sommet de la tige d'éjection (401) est raccordé à la base du réflecteur solaire (2) ; et
les vases d'expansion (405) sont remplis d'un liquide expansif, et lorsque les vases d'expansion (405) sont chauffés, le liquide expansif se dilate pour éjecter la tige d'éjection (401) raccordé aux vases d'expansion (405).

7. Un système de production d'électricité SGT selon la revendication 1, **caractérisé en ce que** les bases (404) sont agencées uniformément le long d'une circonférence, et les tiges télescopiques sont agencées uniformément le long d'une circonférence correspondante.

8. Un système de production d'électricité SGT selon la revendication 1, **caractérisé en ce que** les bases (404) et les tiges télescopiques sont chacune agencées en deux rangées symétriques le long du support de montage (3).

9. Un système de production d'électricité SGT selon la revendication 1, **caractérisé en ce que** les vases d'expansion (405) sont intégrés dans un support de vase (407), et le support de vase (407) est fixé sur le support de montage (3).
